# EUROPEAN PATENT APPLICATION

(11) **EP 3 045 313 A1**
(43) Date of publication of application: **20.07.2016**
(21) Application number: 16151595.2
(22) Date of filing: 15.01.2016
(51) Int. Cl.: B32B 38/00, B32B 38/16, G02C 5/00

(54) **METHOD FOR PRODUCING A MULTILAYER MATERIAL, PARTICULARLY FOR EYEWEAR, AND MULTILAYER MATERIAL OBTAINABLE BY WAY OF SUCH METHOD**

(30) Priority: 19.01.2015 IT MI20150038
(71) Applicant: LA.ES. Laminati Estrusi Termoplastici Societa' per Azioni, 22070 Beregazzo con Figliaro (CO) (IT)
(72) Inventor: CONTERNO, Cosimo Sante, 6850 Mendrisio (CH)
(74) Representative: Modiano, Micaela Nadia

(57) **Abstract**

A method for producing a multilayer material, particularly for eyewear, which comprises at least one layer of at least one polymer and at least one layer of at least one fabric, which comprises the steps of:
i. strain-relieving and stretching the fabric by way of mechanical traction;
ii. cleaning the fabric in water or with a solvent selected from the group constituted by acetone and its mixtures;
iii. treating the polymer by way of one or more passes selected from the group constituted by abrasion, corona treatment, flaming and plasma;
iv. preparing a sheet of multilayer material comprising at least one layer of the strain-relieved and stretched fabric and at least one layer of the polymer, mutually superimposed so as to obtain the required sequence of layers and thickness;
v. making the layers of the sheet of multilayer material adhere by bringing the sheet to a temperature comprised between 120°C and 190°C for a period of time comprised between 10 minutes and 60 minutes, applying a uniform pressure comprised between 10 kg/cm² and 80 kg/cm² on all the faces or on only two faces of the sheet;
vi. cooling the sheet until the ambient temperature is reached in a period of time comprised between 30 minutes and 120 minutes and keeping the pressure applied in step (v) applied constantly.

## Description

The present invention relates to a method for producing a multilayer material that is particularly, although not exclusively, useful and practical in the eyewear sector in order to make frames for eyeglasses, and also relates to such multilayer material.

Nowadays, the eyewear sector occupies a significant market share of the worldwide luxury goods industry. In this industrial sector, research into styling and technology have always been heavily committed to the development, on the one hand, of new decorative effects and, on the other hand, of techniques and technologies for the functional and industrial production of end products, i.e. of frames for eyeglasses, which are at the leading edge.

Techniques and methods, both automatic and artisan, for obtaining decorative effects of various types on a frame for eyeglasses are currently known in the state of the art. By way of example we can cite the application of decorated elements to the frame, the combination of different materials, and the use of fabric or other elements bonded to a support made of polymeric material.

The combination of different materials, in particular the bonding of fabrics and polymeric materials, is a solution that has been used successfully in the recent past for making frames for eyeglasses, according to the trends and fashions proposed by stylists and designers.

However, the conventional techniques and methods for producing a semi-finished material obtained by bonding fabrics and polymeric materials are not devoid of technical drawbacks which to date have not been solved, and which include the difficulty of obtaining a semi-finished material with sufficient flatness, i.e. a surface as flat as possible, and the possibility of delamination, which includes not only the separation of the layers of different materials that make up such semi-finished material, but also the removal of surface material owing to friction, wear etc., from the superficial layers of the semi-finished material.

Flatness is an aspect of great importance in an industrial process for making frames for eyeglasses, in that the lack or insufficiency thereof compromises the efficacy and efficiency of the production process, as well as the level of quality of the frames for eyeglasses. In particular, lack or insufficiency of flatness considerably reduces the workability of the semi-finished material, as a consequence increasing the incidence of discarded material and the costs of reworking.

Delamination is also a particularly important technical problem, because it compromises the appearance of frames for eyeglasses as a result of the necessary processes for making such products, thus also producing a high cost in terms of discarded material.

The aim of the present invention is to overcome the limitations of the known art described above, by devising a method for producing a multilayer material, particularly for eyewear, which makes it possible to obtain effects similar to or better than those obtainable with conventional solutions, while increasing the flatness of the semi-finished material obtained by bonding fabrics and polymeric materials, in order to ensure the continuity of the production process and as a consequence improving the workability of such semi-finished material with traditional machines and processes.

Within this aim, an object of the present invention is to devise a method for producing a multilayer material, particularly for eyewear, whereby the material obtained has high cohesion between the different layers that go to make it up, such as to allow cutting, milling, and bending operations without causing unsightly delamination.

Another object of the present invention is to devise a method for producing a multilayer material which can be used in order to provide articles, particularly for the eyewear industry, by bonding various types of fabrics to various types of polymers, by way of a single production process that is applicable for all polymers used and is compatible with conventional methods of processing frames for eyeglasses.

Another object of the present invention is to provide a method for producing a multilayer material, particularly for eyewear, which is highly reliable, easily and practically implemented and low cost.

This aim and these and other objects which will become better apparent hereinafter are achieved by a method for producing a multilayer material, particularly for eyewear, which comprises at least one layer of at least one polymer and at least one layer of at least one fabric, characterized in that it comprises the steps of:
i. strain-relieving and stretching said at least one fabric by way of mechanical traction;
ii. cleaning said at least one fabric in water or with a solvent selected from the group constituted by acetone and its mixtures;
iii. treating said at least one polymer by way of one or more passes selected from the group constituted by abrasion, corona treatment, flaming and plasma;
iv. preparing a sheet of multilayer material comprising at least one layer of said at least one strain-relieved and stretched fabric and at least one layer of said at least one polymer, mutually superimposed so as to obtain the required sequence of layers and thickness;
v. making the layers of said sheet of multilayer material adhere by bringing said sheet to a temperature comprised between 120°C and 190°C for a period of time comprised between 10 minutes and 60 minutes, applying a uniform pressure comprised between 10 kg/cm² and 80 kg/cm² on at least two faces of said sheet;
vi. cooling said sheet until the ambient temperature is reached in a period of time comprised between 30 minutes and 120 minutes and keeping the pressure applied in step (v) applied constantly.

The aim and objects are also achieved by a multilayer material, which is obtainable by way of the method described herein and which comprises at least one layer of at least one polymer and at least one layer of at least one fabric, and which is particularly useful in the eyewear sector for making frames for eyeglasses.

The aim and objects of the present invention are also achieved by the use of the multilayer material obtainable with the method described herein, in order to make articles, especially for the eyewear sector, such as for example frames for eyeglasses.

Further characteristics and advantages of the invention will become better apparent from the detailed description of a preferred, but not exclusive, embodiment of the method according to the invention.

As noted above, the present invention relates to a method for producing a material with a multilayer structure which comprises at least one layer of at least one polymer and at least one layer of at least one fabric.

The polymers that constitute the at least one layer of the multilayer material can belong to a vast range of types. Preferably, but not exclusively, such polymers can be, in addition to traditional standard plasticized cellulose acetate, biodegradable cellulose acetate, cellulose propionate, polyamide, polyurethane, polymethylmethacrylate, thermoplastic polyesters or polycarbonate.

Biodegradable cellulose acetate is disclosed in Italian patent no. 1409147 and in European patent application no. 12193727.0, both in the name of LA.ES. Laminati Estrusi Termoplastici S.p.A.. Cellulose acetate, mixed with a blend of plasticizers constituted by at least two plasticizers selected from among esters of glycerin, esters of citric acid and esters of tartaric acid, keeping the temperature in the plasticizing step below 50°C, makes it possible to obtain a material that is biodegradable and environmentally friendly, while retaining or even improving the characteristics of appearance, dimensional stability, and compatibility of this material with polycarbonate lenses, which are nowadays essential in the eyewear sector.

Frames for eyeglasses that comprise such biodegradable cellulose acetate can therefore be paired with lenses of any type and material, contrary to what occurs with frames that use traditional formulations of cellulose acetate.

Cellulose propionate is generally used in a niche of the eyewear sector for making classic frames.

Polycarbonate is traditionally used in the sector of sports accessories, thanks to its mechanical resistance to impacts and stresses, and its exceptional transparency. Pairing polycarbonate with fabric therefore makes it possible to obtain refined aesthetic effects in the eyewear sector also, in particular for making frames for eyeglasses for technical and/or sports use.

Polyurethane and polyamide have always been used in the sector of sports accessories, and thanks to their characteristics of elasticity, pleasantness to the touch and brilliance of colors they are particularly adapted to making frames for eyeglasses for technical and/or sports use.

Polymethylmethacrylate and thermoplastic polyesters are not yet very widespread in the high-end eyewear sector, remaining relegated especially to low-end injection-molded eyeglass frames, but because of their great diffusion and their characteristics of lightness, transparency and brilliance of colors they too are particularly adapted to making frames for eyeglasses for technical and/or sports use.

All the polymers used in this invention can be transparent, opalescent or opaque. The coloring of the polymers can vary from their characteristic natural coloring to a wide colorimetric range.

In order to improve the mechanical characteristics of the layers in the polymeric matrix (stretch modulus, resistance to impact etc.) it is possible to add carbon fiber and/or carbon nanotubes to the polymeric material.

Adding carbon fiber occurs by way of a process of compounding in a twin-screw extruder, using a percentage of carbon fiber that varies from 2% to 40% as a function of the mechanical properties that it is desired to obtain. The carbon fiber can be added by way of lateral feeding, or directly in the hopper for feeding the above-mentioned twin-screw extruder.

Carbon nanotubes have an intrinsic tendency to agglomerate and therefore, in order for these to be used while ensuring maximum efficacy, it is necessary to perform a preliminary dispersion operation.

In order to add carbon nanotubes to the polymeric material, in fact, it is necessary to prepare a concentrated master batch for use in varying percentages according to necessity. Using a concentrated master batch makes it possible to obtain the maximum dispersion of the carbon nanotubes inside the polymeric matrix and therefore to ensure the maximum efficacy thereof.

For example, if carbon nanotubes are added to cellulose acetate (either standard plasticized, or biodegradable), it is necessary to pre-disperse them in of the plasticizer. The pre-dispersion can occur in a mixer for liquids with mechanical agitation for a variable time of between 5 and 20 minutes. The blend of plasticizer and carbon nanotubes thus obtained can then be added to and mixed with the staple of cellulose acetate.

It has been noted that in the present invention the polymers are coupled to one or more layers of fabric. In a preferred embodiment of the invention, the fabric used is made of natural fibers. Preferably, the fabric in natural fibers is a cloth of cotton, linen or silk. More preferably, the fabric is cotton of the denim type.

In another embodiment of the invention, the fabric used is made of artificial fibers. Preferably, the fabric made of artificial fibers is a cloth of nylon or rayon. In another embodiment of the invention, the fabric used is non-woven fabric.

The production process according to the present invention can also be adapted to other types of fabrics in order to achieve a greater variety of aesthetic, chromatic and/or decorative effects.

The use of natural, preferably organically-cultivated fibers is particularly advantageous in the context of providing a product with low environmental impact and therefore represents a further aspect of interest for makers of frames for eyeglasses and for the end user, who is increasingly sensitive to environmental issues and to protecting the environment. In particular, the use of natural fibers and of biodegradable cellulose acetate makes it possible to obtain a product with an extremely low environmental impact which is completely biodegradable.

The weight of the fabric used can be comprised between 100 and 900 g/m², preferably comprised between 400 and 700 g/m².

It is important to emphasize that the fabric used in the present invention, prior to the step of coupling and gluing to the polymeric material, must be deprived of all superficial substances (for example starch, primer, stain-resistant substances, impurities, excess dye) which could result in adhesive bonding anomalies.

This operation is performed by way of washing or cleansing in water or with solvent, which can be acetone or an acetone-based blend. Such washing or cleansing also has the purpose of preventing any shrinkage and consequent damaging deformations and/or warping of the fabric during processing.

Furthermore, the fabric used in the present invention has to undergo a process of strain-relieving and stretching under traction, which stabilizes the fabric in order to prevent tensioning owing to the orientation of the fibers of the fabric. Such process can be conducted along a single spatial axis, i.e. only longitudinally to the weft or only transversely to the weft, or simultaneously along both spatial axes.

This operation gives the multilayer material a better flatness, which results in a better aesthetic appearance and a greater facility and accuracy of working during cutting and milling.

Furthermore, this process acts as preparatory work to the subsequent adhesion of the fabric both to the polymer and, where applied, to the hot melt adhesive, in that the fibers of the fabric, if stretched and micro-defibred, have better capacities for adhesion.

The process of strain-relieving and stretching under traction of the fabrics, which is particularly useful for elastic fabrics, can be carried out in two separate ways.

In the first, the process of strain-relieving and stretching is carried out by removing the traction before coupling the fabric with the layer of polymer: in this case no tensions are generated within the fabric.

In the second, the process of strain-relieving and stretching is carried out by removing the traction at the end of the process of coupling the fabric with the layer of polymer: in this case a precompression is generated which gives the resulting sheet of multilayer material a greater resistance to deformation. This precompression present between the layers is such as to contrast, in the resulting sheet of multilayer material, deformation owing to bending and consequent breakage of the sheet.

The stratified structure is provided by alternating in any sequence at least one layer of polymeric material, at least one layer of fabric, permanently mutually adhering, and optionally at least one layer of hot melt adhesive interposed between them.

When the multilayer material comprises more than one layer of polymer, such layers of polymer can have the same thickness or mutually different thicknesses. Preferably, the thickness of each layer of polymer in the multilayer material is comprised between 0.1 and 2 millimeters.

The coupling of the layers can be obtained by way of the application of different techniques, which may produce a synergy when used together.

Generally, the coupling between the layers occurs by applying a pressure comprised between 10 kg/cm² and 80 kg/cm² longitudinally and/or transversely with respect to the sheet of multilayer material obtained by superimposing the layers. When the pressure is applied both longitudinally and transversely, the multilayer material is subjected to pressure in all directions and this facilitates the adhesion of the polymer to the fabric. During the compression, the duration of which is variable between 10 and 60 minutes, according to the thickness of the sheet of multilayer material, the temperature is brought to a value comprised between 120°C and 190°C.

This operation to couple the layers means that the final article is more homogeneous and, especially, free from damaging tensioning. In fact, thanks to the pressure and to the temperature, the polymers penetrate through the structure of the fabric (weft and warp), impregnating it, thus optimizing the adhesion between the various layers and preventing the delamination of the multilayer material. The polymer present in the fabric, by interpenetrating with the textile fibers, therefore acts as a binder with the other layers of the material.

In order to implement this technique, the temperature to which the polymer is brought, during the production of the multilayer material, must be higher than the softening temperature, in order to render it viscous and enable the passage thereof between the fibers of the fabric. In order to obtain maximum interpenetration between polymer and fabric, it is possible to use materials that polymerize during the compression step.

In order to further optimize the effects of the pressure on the coupling of the layers, it is maintained during the cooling cycle as well.

This technique, which combines the effects of pressure and temperature, allows the use of thermoplastic polymers, thermosetting polymers (for example epoxy resins), and reactive polyurethanes.

In a preferred embodiment of the invention, it is also possible to interpose, between the layers of polymer and of fabric, further layers of hot melt adhesive, of thickness comprised between 30 micrometers and 80 micrometers, preferably equal to 60 micrometers, which is also rendered integral with the polymer and with the fabric through the technique described above, which combines pressure and temperature in the indicated time periods.

Hot melt adhesives are usually polyurethane- or polyolefin-based films that are subjected to surface treatments that enable such adhesives to maintain different and normally incompatible substrates in mutual adhesion.

Use of a hot melt adhesive makes it possible to optimize the use of the contact surface between the layers of polymer and of fabric, simplify the process of producing the multilayer material, and avoid the use of products that are potentially hazardous, such as solvents.

If the polymer used is standard or biodegradable cellulose acetate, then instead of using a hot melt adhesive it is necessary to spread a film of adhesive on the polymer, in order to obtain an optimal degree of adhesion between the layers.

The multilayer material obtained with the method described can be worked by way of the standard techniques used for mechanical working of frames for eyeglasses, such as for example cutting, milling, hot-folding etc., without undergoing delamination of the layers or general deterioration.

The term "adhesive hold" is used to mean the tendency of two mutually glued surfaces to remain joined when they are subjected to stress during the normal machining steps carried out in the production process of frames for eyeglasses, such as for example cutting, milling, perforation, folding, core insertion, tumbling, and during normal use by the user.

At the end of the gluing, a sheet of multilayer material is obtained in which the layers are perfectly joined and mutually bonded. Such sheet can then be painted. Painting prevents the unraveling of the fabric and enables the workability of the product during cutting, milling, and perforation operations and, more generally, in processes that require resistance to cutting stresses.

Painting ensures a correct impermeabilization of the fabric that constitutes the outer layer of the multilayer material, preventing any unraveling of the material during the mechanical machining thereof.

If the multilayer material comprises a cellulosic-type polymer, the paint used can be based on cellulose acetate.

The paint, applied by way of spreading, can contain silver ions in order to impart an antibacterial action, or nanometric titanium dioxide (Ti02), which is known for its photocatalytic action and is therefore capable of performing a self-cleaning and antibacterial action. In order to obtain better resistance to light and therefore prevent the loss of color tone of the fabric, the paint can further be additivated with substances that absorb UV rays.

After the paint has dried, the sheet of multilayer material can be treated by way of a satin finishing machine and/or a brushing machine. This treatment, in addition to removing any excess quantity of paint, gives the painted fabric surface the original softness to the touch that is typical of fabric.

The multilayer material is usually produced in the form of a flat sheet, ideally measuring 170 x 700 millimeters and with variable thickness according to the number of superimposed layers.

The multilayer material can be used for producing an article, ideally intended for the eyeglass frame industry, the outer surfaces of which have a texture that offers a sensation to the touch which is similar to fabric, and are decorated with designs and weaves deriving from the very presence of the fabric.

During the industrial implementation of the method according to the present invention, it is possible to supply the components continuously, in order to optimize production times of the multilayer material, reduce manual interventions in the production cycle, and ensure a production that is constant in quality and higher in quantities.

At the end of all the operations described above, the sheet of multilayer material obtained can be considered a semi-finished product ready to be subjected to the typical processing of the eyewear industry, such as for example milling, die-cutting, addition of hinges and core insertion, folding, and mounting of the lenses. The present invention, therefore, also relates to the use of the multilayer material, produced with the method described herein, for making articles, in particular for the eyewear sector, such as for example frames for eyeglasses.

In light of the foregoing description, in practice it has been found that the invention fully achieves the set aim and objects. In particular, it has been seen that the method for producing a multilayer material, particularly for eyewear, thus conceived makes it possible to overcome the qualitative limitations of the known art, in that it makes it possible to obtain a multilayer material, which comprises at least one layer of at least one polymer and at least one layer of at least one fabric, and which has optimal characteristics of flatness, and therefore is more easily workable with traditional machines and processes.

Furthermore, the multilayer material obtained by the method according to the present invention makes it possible to produce articles with outer surfaces that have a pleasing effect, both from the tactile point of view, the texture being similar to that of the fabric, and also from the visual point of view, it being decorated with designs and weaves deriving from the fabric.

The invention, thus conceived, is susceptible of numerous modifications and variations, all of which are within the scope of the appended claims. Moreover, all the details may be substituted by other, technically equivalent elements.

In practice the materials employed, and the contingent dimensions and shapes, may be any according to requirements and to the state of the art.

In conclusion, the scope of protection of the claims shall not be limited by the explanations or by the preferred embodiments illustrated in the description by way of examples, but rather the claims shall comprise all the patentable characteristics of novelty that reside in the present invention, including all the characteristics that would be considered as equivalent by the person skilled in the art.

The disclosures in Italian Patent Application No. MI2015A000038 (102015902322172) from which this application claims priority are incorporated herein by reference.

## Claims

1. A method for producing a multilayer material, particularly for eyewear, which comprises at least one layer of at least one polymer and at least one layer of at least one fabric, **characterized in that** it comprises the steps of:
i. strain-relieving and stretching said at least one fabric by way of mechanical traction;
ii. cleaning said at least one fabric in water or with a solvent selected from the group constituted by acetone and its mixtures;
iii. treating said at least one polymer by way of one or more passes selected from the group constituted by abrasion, corona treatment, flaming and plasma;
iv. preparing a sheet of multilayer material comprising at least one layer of said at least one strain-relieved and stretched fabric and at least one layer of said at least one polymer, mutually superimposed so as to obtain the required sequence of layers and thickness;
v. making the layers of said sheet of multilayer material adhere by bringing said sheet to a temperature comprised between 120°C and 190°C for a period of time comprised between 10 minutes and 60 minutes, applying a uniform pressure comprised between 10 kg/cm² and 80 kg/cm² on at least two faces of said sheet;
vi. cooling said sheet until the ambient temperature is reached in a period of time comprised between 30 minutes and 120 minutes and keeping the pressure applied in step (v) applied constantly.

2. The method for producing a multilayer material according to claim 1, **characterized in that** the strain-relieving and stretching of said at least one fabric by way of mechanical traction occurs in a longitudinal direction with respect to the weft, transversely to the weft or in both directions.

3. The method for producing a multilayer material according to claim 1 or 2, **characterized in that** said sheet of multilayer material prepared in step (iv) further comprises at least one layer of hot melt adhesive, interposed between said at least one layer of at least one polymer and said at least one layer of at least one fabric.

4. The method for producing a multilayer material according to one or more of the preceding claims, **characterized in that** it further comprises the step of:
vii. trimming said sheet of multilayer material, removing the material in excess with respect to the required size of said sheet.

5. The method for producing a multilayer material according to one or more of the preceding claims, **characterized in that** it further comprises the steps of:
viii. painting said sheet of multilayer material by applying a quantity of paint comprised between 25 g/m² e 80 g/m²;
ix. drying said paint by introducing said sheet of multilayer material in a thermostatically-controlled ventilated oven at the temperature of 40°C for at least 3 hours, or by leaving said sheet of multilayer material in the open air for a period comprised between 12 hours and 24 hours;
x. polishing said sheet of painted multilayer material by way of a satin finishing machine and/or a brushing machine.

6. The method for producing a multilayer material according to claim 5, **characterized in that** the quantity of said paint applied in the painting step of said multilayer material sheet is equal to 50 g/m².

7. A multilayer material, particularly for eyewear, which is obtainable by way of the method according to any one of the preceding claims.

8. The multilayer material according to claim 7, **characterized in that** it comprises at least one layer of said at least one polymer and at least one layer of said at least one fabric made of natural fibers.

9. The multilayer material according to claim 7 or 8, **characterized in that** it comprises at least one layer of said at least one polymer, with the addition of carbon fiber and/or carbon nanotubes, and at least one layer of said at least one fabric.

10. Use of the multilayer material according to one or more of claims 7, 8 or 9 for providing an article, particularly for eyewear.

11. An article, **characterized in that** it comprises the multilayer material according to claim 7, 8 or 9.

12. The article according to claim 11, **characterized in that** said article is a frame for eyeglasses.
